(19) **Europäisches Patentamt**
European Patent Office
Office européen des brevets

(11) **EP 1 807 741 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(21) Anmeldenummer: 05760705.3

(22) Anmeldetag: **18.07.2005**

(51) Int Cl.:
*G05B 21/02* (2006.01)     *G05B 9/02* (2006.01)

(86) Internationale Anmeldenummer:
**PCT/EP2005/053447**

(87) Internationale Veröffentlichungsnummer:
**WO 2006/029925 (23.03.2006 Gazette 2006/12)**

(54) **VERFAHREN ZUM VERARBEITEN VON SENSORDATEN**

METHOD FOR PROCESSING SENSOR DATA

PROCEDE POUR TRAITER DES DONNEES DE CAPTEUR

(84) Benannte Vertragsstaaten:
**DE ES FR GB**

(30) Priorität: **15.09.2004   DE 102004044467**

(43) Veröffentlichungstag der Anmeldung:
**18.07.2007   Patentblatt 2007/29**

(73) Patentinhaber: **ROBERT BOSCH GMBH**
**70442 Stuttgart (DE)**

(72) Erfinder:
• **THIEL, Frank**
**71679 Asperg (DE)**
• **MAIER, Ralf**
**70839 Gerlingen (DE)**
• **MORGENTHAL, Robert**
**70806 Kornwestheim (DE)**

(56) Entgegenhaltungen:
**DE-A1- 19 734 248     US-A1- 2003 171 853**

EP 1 807 741 B1

**Beschreibung**

Stand der Technik

In Systemen mit Verfahren, welche Daten asynchroner Sensoren nutzen, sind die Sensordatenwerte prinzipbedingt unterschiedlich alt. Werden Simulationen über Abtastvariationen betrachtet, dann werden die Sensordaten stark aufgeweitet. Dadurch müssen die Verfahren, beispielsweise Auslöseverfahren für Personenschutzmittel, welche die verarbeiteten Sensordatenwerte verwenden, entsprechend robust gegen diese Sensordatenvariationen ausgelegt werden, wodurch die Erfüllung von Kundenanforderungen deutlich erschwert und die Systemkosten erhöht werden.

In der Offenlegungsschrift DE 197 34 248 A1 werden beispielsweise ein Verfahren und eine Einrichtung zur Übertragung von Sensorausgangssignalen zwischen asynchron arbeitenden Sensoren und ihren jeweiligen Datenverarbeitungseinrichtungen beschrieben. Bei dem beschriebenen Verfahren werden Sensordaten von mindestens einem asynchronen Sensor mit einer Übertragungsrate in einen Zwischenspeicher übertragen und mit einer vorgegebenen Abtastrate aus dem Zwischenspeicher ausgelesen.

Vorteile der Erfindung

Das erfindungsgemäße Verfahren zum Verarbeiten von Sensordaten mit den Merkmalen des unabhängigen Patentanspruchs hat demgegenüber den Vorteil, dass die Streuung der Sensordaten, welche sich durch Signalvariationen bei einer asynchroner Sensorabtastung ergibt, durch eine Berechnung der Mittelwerte der ausgelesenen Sensordaten mit einer festen synchronisierten Phasenverschiebung bezüglich der Abtastrate verringert wird. Dadurch kann die Robustheit eines Verfahrens verbessert werden, welches die verarbeiteten Daten als Eingabewerte verwendet, beispielsweise zur Auslösung von Personenschutzmittel wie Airbag, Gurtstraffer usw. Damit wird auch das Gesamtsystem, das aus asynchronen Sensoren und einem Steuergerät mit Auswerteverfahren besteht, bezüglich Signalvariationen verbessert, welche prinzipbedingt in der Realität auftreten. Durch die reduzierte Signalstreuung können Kundenanforderungen leichter erfüllt und die Systemkosten reduziert werden. Das Verhältnis der Übertragungsrate zur Abtastrate ist in vorteilhafter Weise so gewählt, dass die Anzahl der innerhalb einer Abtastperiode gemittelten Sensordaten n oder (n+1) ist, wobei n eine natürliche Zahl größer gleich zwei ist. Die Phasenlage der von dem mindestens einen asynchronen Sensor übertragenen Sensordaten wird bei Auftreten der größeren Anzahl (n+1) von Sensordaten innerhalb einer Abtastperiode geschätzt und für die nachfolgenden Abtastperioden mit der kleineren Anzahl von übertragenen Sensordaten fest vorgegeben. Dadurch kann das unterschiedliche "Alter" der Sensordatenwerte bezüglich der Abtastrate und der einzelnen Abtastimpulse kompensiert und damit deren Streuung bei Signalvariationen verringert werden. Die übertragenen Sensordaten werden quasi-synchronisiert zur Abtastrate.

Durch die in den abhängigen Ansprüchen aufgeführten Maßnahmen und Weiterbildungen sind vorteilhafte Verbesserungen des im unabhängigen Patentanspruch angegebenen Verfahrens zum Verarbeiten von Sensordaten möglich.

Besonders vorteilhaft ist, dass durch das erfindungsgemäße Verfahren die aus (n+1) Sensordaten berechneten Mittelwerte jeweils als Ausgangswerte für eine Interpolation, vorzugsweise eine lineare Interpolation, der nachfolgenden aus n Sensordaten berechneten Mittelwerte verwendet werden. Dadurch wird der mittels der Interpolation berechnete Mittelwert der Sensorsignale mit einem konstanten Alter bezüglich der Abtastimpulse berechnet.

Weiterhin ist es von Vorteil dass für die Interpolation die Anzahl von aufeinander folgenden Mittelwertbildungsvorgängen ermittelt wird, welche jeweils den Mittelwert aus n ausgelesenen Sensordaten bilden, und die Anzahl auf Null zurückgesetzt wird, wenn ein Mittelwertbildungsvorgang ausgeführt wird, der den Mittelwert aus (n+1) Sensordaten bildet.

Der Mittelwert für n innerhalb einer Abtastperiode auftretende Sensordaten in Abhängigkeit von der Anzahl kann beispielsweise durch die Gleichung (1) ermittelt werden:

$$S_{M(ZS)} = (t_{(ZS)}/T_{pas})*(S_{Mneu} - S_{Malt}) + S_{Malt} \qquad (1)$$

mit

$S_M$: Mittelwert,
ZS: Anzahl der Mittelwerlbildungsvorgänge mit n Sensordatenwerten
$T_{pas}$: Übertragungsrate.

Vorteilhafter Weise kann für eine laufzeitoptimale Implementierung in einem Steuergerät der von der Anzahl ZS abhängige Faktor ($t_{(ZS)}$/Tpas) im Voraus berechnet und gespeichert werden. Die im Voraus berechneten Faktoren können beispielsweise in einem Array mit einem Index abgelegt werden, welcher der jeweiligen Anzahl ZS entspricht. Die Zeitspanne $t_{(ZS)}$ repräsentiert allgemein den zeitlichen Abstand zwischen dem interpolierten Wert und dem direkt vorhergehenden übertragenen Datenwert und kann beispielsweise durch die Gleichung (2) berechnet werden:

$$t_{(ZS)}=(Tgs-Tpas*Div(Tgs/Tpas))*ZS \qquad (2)$$

mit

Tgs: Abtastrate
Div: Ganzzahldivision ohne Rest

Die allgemeine Gleichung (3) für eine lineare Interpolation ergibt sich dann aus den Gleichungen (1) und (2):

$$S_{M(ZS)}=((Tgs/Tpas)-Div(Tgs/Tpas))*ZS*(S_{Mneu}-S_{Malt})+S_{Malt} \qquad (3)$$

Zeichnung

Ausführungsbeispiele der Erfindung sind in der Zeichnung dargestellt und werden in der nachfolgenden Beschreibung näher erläutert.

Es zeigen

Figur 1     ein Blockschaltbild einer Vorrichtung zur Durchführung des erfindungsgemäßen Verfahrens
Figur 2     ein Zeitablaufdiagramm zur Darstellung der Signale bei einem herkömmlichen Verarbeitungsverfahren,
Figur 3     ein Zeitablaufdiagramm zur Darstellung der Signale bei einem erfindungsgemäßen Verarbeitungsverfahren, und
Figur 4     eine schematische Darstellung der Signalstreuung für unterschiedliche Verarbeitungsverfahren.

Beschreibung

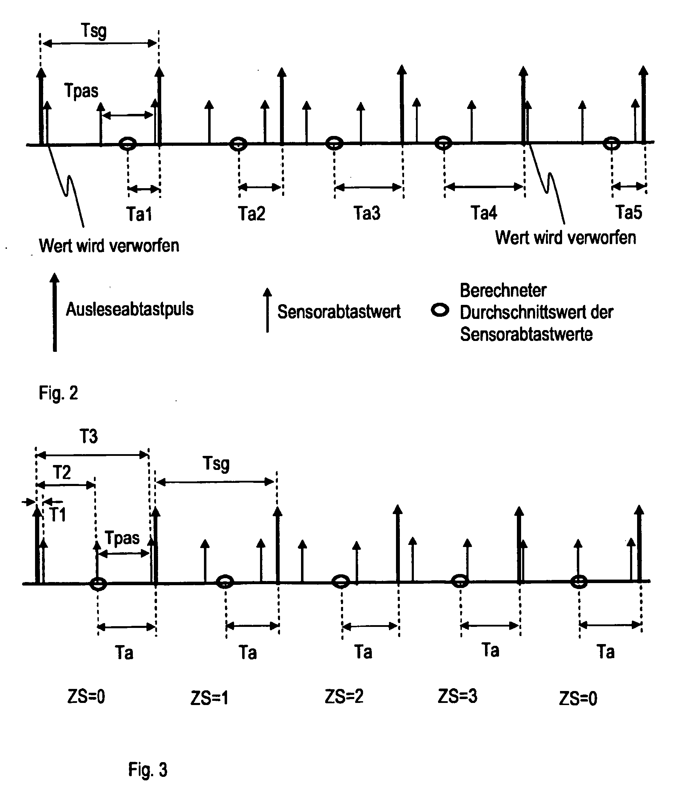

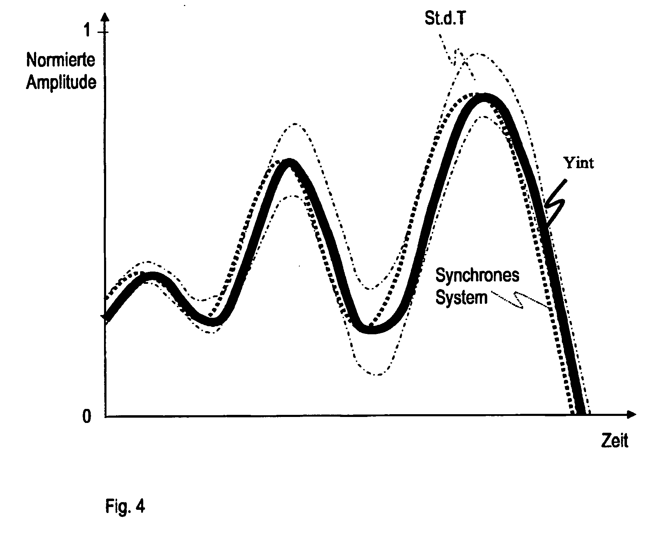

Nach dem aktuellen Stand der Technik werden ausgelagerte periphere Sensoren 10 über eine Zuleitung an ein Steuergerät 100 angeschlossen. Wie aus Fig. 2 ersichtlich ist, sendet der mindestens eine asynchrone ausgelagerte Sensor 10 bei einem herkömmlichen Verarbeitungsverfahren die Sensordaten mit festen Zeitabständen Tpas von z.B. 228us an das Steuergerät 100. Die Daten werden zwischengespeichert und beispielsweise mit einer Abtastrate Tsg von 512$\mu$s abgetastet, wobei zur Weiterverarbeitung der Mittelwert der letzten beiden Sensordatenwerte berechtet und benutzt wird. Wie aus Fig. 2 ersichtlich ist, weisen die berechneten Mittelwerte eine unterschiedliche Phasenverschiebung Ta1 bis Ta5 bezüglich der Abtastimpulse auf, d.h. die Sensorwerte sind unterschiedlich "alt". Im dargestellten Beispiel sind Ta1=142$\mu$s, Ta2=198$\mu$s, Ta3=254$\mu$s, Ta4=310$\mu$s und Ta5=138$\mu$s. Dadurch ergibt sich, wie aus Fig. 4 ersichtlich ist, bei der Simulation von Abtastvariationen eine deutliche Aufweitung der Sensordaten. Das Alter der Sensorwerte ist durch die vorgegebenen Übertragungsrate von Tpas=228$\mu$s auf +/-114$\mu$s genau bekannt. Für ein theoretisches Worst-Case-Signal von WCS=A*sin(2*$\pi$*$f_{Grenz}$*114$\mu$s) ergibt sich mit einer Signalamplitude A von beispielsweise 120LSB bei einer Sensorgrenzfrequenz $f_{Grenz}$=400Hz eine Signalverfälschung von +/-33,9LSB, was ungefähr einem Viertel der maximalen Signalamplitude von 120LSH entspricht. Die Amplitude 120LSB kann in Abhängigkeit vom Anwendungsgebiet der Sensorik verschiedene physikalische Größen wie Beschleunigung, Temperatur, Druck usw. repräsentieren.

Erfindungsgemäß werden daher die Mittelwerte der ausgelesenen Sensordaten mit einer festen synchronisierten Phasenverschiebung Ta bezüglich der Abtastrate Tsg berechnet. Dies wird dadurch erreicht, dass das Verhältnis der Übertragungsrate Tpas zur Abtastrate Tsg so gewählt ist, dass die Anzahl der innerhalb einer Abtastperiode gemittelten Sensordaten n oder (n+1) ist, wobei n eine natürliche Zahl größer gleich zwei ist. Die Phasenlage der von dem mindestens einen asynchronen Sensor übertragenen Sensordaten wird bei Auftreten der größeren Anzahl (n+1) von Sensordaten innerhalb einer Abtastperiode geschätzt und für die nachfolgenden Abtastperioden mit der kleineren Anzahl n von übertragenen Sensordaten fest vorgegeben. Dadurch kann das unterschiedliche "Alter" der Sensordatenwerte bezüglich der Abtastrate und der einzelnen Abtastimpulse kompensiert und damit deren Streuung bei Signalvariationen verringert werden.

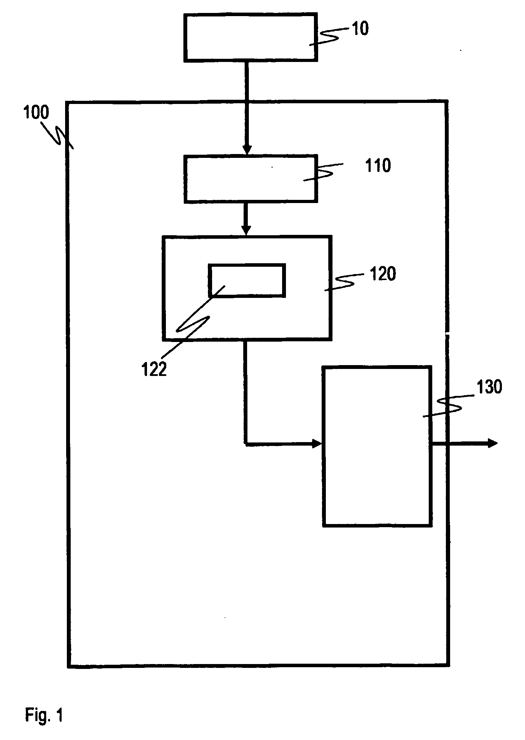

Figur 1 zeigt ein Blockschaltbild einer Vorrichtung zur Durchführung des erfindungsgemäßen Verfahrens zum Verarbeiten von Sensordaten und Figur 3 zeigt ein Zeitablaufdiagramm zur Darstellung der Signale bei dem erfindungsgemäßen Verarbeitungsverfahren. Nachfolgend wird das erfindungsgemäße Verfahren unter Bezugnahme auf die Fig. 1 und 3 beschrieben.

Wie aus Fig. 1 ersichtlich ist, umfasst die Vorrichtung eine ausgelagerte Sensorik 10, die mindestens einen asynchronen Sensor umfasst und über eine Zuleitung an ein Steuergerät 100 angeschlossen ist. Die Sensorik 10 überträgt Sensordaten mit festen Zeitabständen Tpas von z.B. 228us an das Steuergerät 100. Die übertragenen Sensordaten werden in einem Zwischenspeicher 110 zwischengespeichert. Das Steuergerät 100 umfasst eine Auswerte- und Steuereinheit 120, die beispielsweise als Mikroprozessor ausgeführt ist und die Daten zyklisch mit einer Abtastrate Tsg von z.B. 512$\mu$s aus dem Zwischenspeicher 110 ausliest, verarbeitet und beispielsweise Eingabewerte für eine Auslöseeinheit 130 erzeugt, welche nicht dargestellte Personenschutzmittel, wie Airbag, Gurtstraffer usw. ansteuert. Durch das Auslesen der Sensordaten wird der Zwischenspeicher 110 geleert. Der Auslesezyklus Tsg=512$\mu$s ist bei der Übertragungsrate Tpas von 228$\mu$s so gewählt, dass zur Mittelwertbildung 2 oder 3 Sensordatenwerte innerhalb einer Abtastperiode ausgelesen werden. Die Auswerte- und Steuereinheit 120 umfasst einen Zähler 122, welcher die Mittelwerlbildungsvorgänge zählt, bei welchen der Mittelwert aus zwei innerhalb einer Abtastperiode Tsg übertragenen Sensordatenwerten gebildet wird. Werden innerhalb einer Abtastperiode Tsg drei Sensordatenwerte übertragen, dann setzt der entsprechende Mittelwertbildungsvorgang den Zähler 122 auf Null zurück. Der Zählerstand ZS des Zählers 122 wird für eine Interpolation, vorzugsweise eine lineare Interpolation, der Mittelwerte verwendet. Fig. 3 zeigt beispielhaft, dass durch das Verhältnis der Übertragungsrate Tpas zur Abtastrate Tsg zwei oder drei Sensordatenwerte innerhalb einer Abtastperiode übertragen werden. Während der ersten Abtastperiode Tsg werden beispielsweise drei Sensordatensignale mit einem zeitlichen Abstand von T1=28$\mu$s, T2=256$\mu$s und T3=484$\mu$s abgetastet und der Zählerstand ZS des Zählers 122 auf Null gesetzt. Werden innerhalb einer Abtastperiode Tsg drei Sensordatenwerte ausgelesen, dann geht das erfindungsgemäße Verfahren davon aus, dass diese mittig bezüglich der Abtastimpulse angeordnet sind. Diese Annahme kann bei den vorgegebenen Zahlenwerte für die Abtastrate Tsg und der Obertragungsrate auf+/- 28$\mu$s genau getroffen werden. Mittels einer nachfolgenden linearen Interpolation wird der Mittelwert der Sensorsignale mit einer konstanten Phasenverschiebung Ta=256$\mu$s bezüglich der Abtastimpulse berechnet, d.h. mit der halben Periodendauer des Abtastsignals Tsg. Dadurch wird die Signalstreuung über mehrere Abtastvariationen deutlich reduziert, wie aus Fig. 4 ersichtlich ist.

Die Interpolation für die Mittelwerte der nachfolgenden Mittelwertberechnungen, die nur zwei übertragene Sensordatenwerte berücksichtigen, wird beispielsweise durch eine lineare Interpolation gemäß der Gleichung (3) berechnet:

$$S_{M(ZS)}=((Tgs/Tpas)-Div(Tgs/Tpas))*ZS*(S_{Mneu}-S_{Malt})+S_{Malt} \qquad (3)$$

mit

$S_M$: Mittelwert,
ZS: Anzahl der Mittelwertbildungsvorgänge mit n Sensordatenwerten
Tpas: Übertragungsrate
Tgs: Abtastrate.

Die Ganzzahldivision ohne Rest Div(Tgs/Tpas) ergibt für die im Ausfuhrungsbeispiel verwendeten Zahlenbeispiele für Tpas=228$\mu$s und Tgs=512$\mu$s einen Wert von 2. Anstatt der beschriebenen linearen Interpolation können auch Interpolationen höherer Ordnung angewandt werden.

Wie weiter aus Fig. 3 ersichtlich ist, erhöht sich der Zählerstand ZS des Zählers 122 durch jede der Mittelwertbildungsvorgänge mit zwei Sensordaten bis zu einem Zählerstand von drei. Dann wird der Zähler 122 durch den Mittelwertbildungsvorgang mit drei Sensorwerten wieder auf Null zurückgesetzt. Für eine laufzeitoptimale Implementierung kann im Steuergerät 100 in vorteilhafter Weise der von der Anzahl abhängige Faktor $(t_{(zs)}/Tpas)=((Tgs/Tpas)-Div(Tgs/Tpas))*ZS$, im Voraus berechnet und gespeichert werden, beispielsweise in einem Array mit einem Index, welcher dem jeweiligen Zählerstand ZS entspricht.

Das Alter der Sensorwerte ist durch die vorgegebenen Übertragungsrate von Tpas=256$\mu$s auf+/- 28$\mu$s genau bekannt. Für ein theoretisches Worst-Case-Signal von $WCS=A*sin(2*\pi*f_{Grenz}*28\mu s)$ ergibt sich mit einer Signalamplitude A von beispielsweise 120LSB bei einer Sensorgrenzfrequenz $f_{Grenz}$=400Hz eine Signalverfälschung von +/-8,4 LSB, was ungefähr einem Viertel der Signalverfälschung von +/-33,9LSB beim herkömmlichen Verfahren entspricht. Die Signalvarianz beim erfindungsgemäßen Verfahren ist daher deutlich kleiner als beim herkömmlichen Verfahren. Die Amplitude 120LSB kann in Abhängigkeit vom Anwendungsgebiet der Sensorik verschiedene physikalische Größen wie Beschleunigung, Temperatur, Druck usw. repräsentieren.

Die unterschiedlichen Signalvarianzen sind in Fig. 4 nochmals dargestellt. Fig. 4 zeigt beispielhaft eine Crashsimulation über ca. 400 Abtastperioden mit einer Periodendauer Tsg=512µs, was ca. 900 Übertragungsperioden mit einer Periodendauer Tpas=228µs entspricht, von verschiedenen Verarbeitungsverfahren mit normierten Signalamplituden. Die punktierte Linie zeigt zum Vergleich den Signalverlauf eines synchronen Systems, bei dem prinzipbedingt keine Varianz auftritt. Der fett dargestellte Signalverlauf zeigt die Signalvarianz des erfindungsgemäßen Verfahrens und der strichpunktiert dargestellte Rahmen zeigt den Bereich der Signalvarianz eines herkömmlichen Verfahrens.

Das Verfahren kann prinzipiell bei allen Systemen angewandt werden, welche Sensordaten von asynchronen Sensoren verarbeiten, um Eingabewerte, beispielsweise für Auslöseverfahren von Personenschutzmittel, zu erzeugen. Die Sensorik mit asynchronen Sensoren kann beispielsweise als Teil einer Upfrontsensorik und/oder einer Umfeldsensorik und/oder einer Seitenaufprallsensorik und/oder einer Kontaktsensorik für den Fußgängerschutz ausgeführt sein.

### Patentansprüche

1. Verfahren zum Verarbeiten von Sensordaten für Personenschutzmittel, welche von mindestens einem asynchronen Sensor (10) mit einer Übertragungsrate (Tpas) in einen Zwischenspeicher (110) übertragen werden, wobei die Sensordaten mit einer vorgegebenen Abtastrate (Tsg) aus dem Zwischenspeicher ausgelesen werden, **dadurch gekennzeichnet, dass** aus einer vorgegebenen Anzahl ausgelesener Sensordaten ein Mittelwert ($S_M$) berechnet wird, wobei das Verhältnis der Übertragungsrate (Tpas) zur Abtastrate (Tsg) so gewählt ist, dass die Anzahl der innerhalb einer Abtastperiode gemittelten Sensordaten n oder (n+1) ist, wobei die Mittelwerte ($S_M$) der ausgelesenen Sensordaten mit einer festen synchronisierten Phasenverschiebung (Ta), bezüglich der Abtastrate (Tsg) berechnet werden, welche bei der Mittelwertbildung von (n+1) Sensordaten bestimmt wird, und wobei n eine natürliche Zahl größer gleich zwei ist.

2. Verfahren nach Anspruch 1, **dadurch gekennzeichnet, dass** jeweils die aus (n+1) Sensordaten berechneten Mittelwerte ($S_M$) als Ausgangswert für eine Interpolation der nachfolgenden aus n Sensordaten berechneten Mittelwerte ($S_M$) verwendet werden.

3. Verfahren nach Anspruch 2, **dadurch gekennzeichnet, dass** für die Interpolation die Anzahl (ZS) von aufeinander folgenden Mittelwertbildungsvorgängen ermittelt wird, welche jeweils den Mittelwert ($S_M$) aus n ausgelesenen Sensordaten bilden, wobei die Anzahl (ZS) auf Null zurückgesetzt wird, wenn der Mittelwert ($S_M$) aus (n+1) Sensordaten gebildet wird.

4. Verfahren nach Anspruch 2, **dadurch gekennzeichnet, dass** der Mittelwert ($S_M$) für n innerhalb einer Abtastperiode (Tsg) auftretende Sensordaten in Abhängigkeit von der Anzahl (ZS) durch die lineare Interpolationsgleichung

$$S_{M(ZS)}=((Tgs/Tpas)-Div(Tgs/Tpas))*ZS*(S_{Mneu}-S_{Malt})+S_{Malt}$$

interpoliert wird.

5. Verfahren nach Anspruch 2, **dadurch gekennzeichnet, dass** die vom der Anzahl (ZS) abhängigen Faktoren ($t_{(zs)}$/Tpas)=((Tgs/Tpas)-Div(Tgs/Tpas))*ZS im Voraus berechnet und gespeichert werden.

6. Verfahren nach Anspruch 5, **dadurch gekennzeichnet, dass** die im Voraus berechneten Faktoren in einem Array mit einem Index abgelegt werden, welcher der jeweiligen Anzahl (ZS) entspricht.

7. Verfahren nach einem der Ansprüche 1 bis 6, **dadurch gekennzeichnet, dass** die verarbeiteten Sensordaten als Eingabewerte eines Auslöseverfahrens für Personenschutzmittel verwendet werden.

8. Verfahren nach einem der Ansprüche 1 bis 7, **dadurch gekennzeichnet, dass** der mindestens eine asynchrone Sensor (10) als Teil einer Upfrontsensorik und/oder einer Umfeldsensorik und/oder einer Seitenaufprallsensorik und/oder einer Kontaktsensorik für den Fußgängerschutz ausgeführt wird.

**Claims**

1. Method for processing sensor data for personal protection means, which data are transmitted into a buffer (110) from at least one asynchronous sensor (10) at a transmission rate (Tpas), wherein the sensor data are read out from the buffer at a predefined sampling rate (Tsg), **characterized in that** a mean value ($S_M$) is calculated from a predefined number of read-out sensor data items, wherein the ratio of the transmission rate (Tpas) to the sampling rate (Tsg) is selected such that the number of the sensor data items which are averaged within a sampling period is n or (n+1), wherein the mean values ($S_M$) of the read-out sensor data are calculated with a fixed synchronized phase shift (Ta) with respect to the sampling rate (Tsg), which sensor data are determined during the formation of mean values of (n+1), and wherein n is a natural number which is greater than or equal to two.

2. Method according to Claim 1, **characterized in that** in each case the mean values ($S_M$) which are calculated from (n+1) sensor data items are used as an initial value for interpolation of the subsequent mean values ($S_M$) which are calculated from n sensor data items.

3. Method according to Claim 2, **characterized in that** for the interpolation the number (ZS) of successive mean value formation processes which respectively form the mean value ($S_M$) from n read-out sensor data items is determined, wherein the number (ZS) is reset to zero when the mean value ($S_M$) is formed from (n+1) sensor data items.

4. Method according to Claim 2, **characterized in that** the mean value ($S_M$) for n sensor data items occurring within a sampling period (Tsg) is interpolated as a function of the number (ZS) by means of the linear interpolation equation

$$S_{M(ZS)} = ((Tgs/Tpas) - Div(Tgs/Tpas)) * ZS * (S_{Mneu} - S_{Malt}) + S_{Malt}$$

5. Method according to Claim 2, **characterized in that** the factors $(t_{(zs)}/Tpas) = ((Tgs/Tpas) - Div(Tgs/Tpas)) * ZS$ which are dependent on the number (ZS) are calculated in advance and stored.

6. Method according to Claim 5, **characterized in that** the factors which are calculated in advance are stored in an array with an index which corresponds to the respective number (ZS).

7. Method according to one of Claims 1 to 6, **characterized in that** the processed sensor data are used as input values of a triggering method for personal protection means.

8. Method according to one of Claims 1 to 7, **characterized in that** the at least one asynchronous sensor (10) is embodied as part of an upfront sensor system and/or a surroundings sensor system and/or a side impact sensor system and/or a contact sensor system for pedestrian protection.

**Revendications**

1. Procédé de traitement de données de capteur pour des équipements de protection de personne, lesquelles sont transmises par au moins un capteur asynchrone (10) à une fréquence de transmission (Tpas) dans une mémoire temporaire (110), les données de capteur étant lues depuis la mémoire temporaire à une fréquence d'échantillonnage (Tsg) prédéfinie, **caractérisé en ce qu'**une valeur moyenne ($S_M$) est calculée à partir d'un nombre prédéfini de données de capteur lues, le rapport entre la fréquence de transmission (Tpas) et la fréquence d'échantillonnage (Tsg) étant choisi de telle sorte que le nombre de données de capteur dont la moyenne est calculée à l'intérieur de la période d'échantillonnage est égal à n ou (n+1), les valeurs moyennes ($S_M$) des données de capteur lues étant calculées avec un déphasage (Ta) synchronisé fixe par rapport à la fréquence d'échantillonnage (Tsg), lequel est déterminé lors du calcul de la valeur moyenne de (n+1) données de capteur et n étant un entier naturel supérieur ou égal à deux.

2. Procédé selon la revendication 1, **caractérisé en ce que** les valeurs moyennes ($S_M$) calculées à partir de (n+1) données de capteur sont utilisées comme valeur initiale pour une interpolation des valeurs moyennes ($S_M$) suivantes calculées à partir de n données de capteur.

3. Procédé selon la revendication 2, **caractérisé en ce que** le nombre (ZS) d'opérations de calcul de valeur moyenne successives, lesquelles calculent à chaque fois la valeur moyenne ($S_M$) à partir de n données de capteur lues, est déterminé pour l'interpolation, le nombre (ZS) étant remis à zéro lorsque la valeur moyenne ($S_M$) de (n+1) données de capteur est calculée.

4. Procédé selon la revendication 2, **caractérisé en ce que** la valeur moyenne ($S_M$) est interpolée pour n données de capteur qui se produisent à l'intérieur d'une période d'échantillonnage (Tsg) en fonction du nombre (ZS) par l'équation d'interpolation linéaire

$$S_{M(ZS)} = ((Tgs/Tpas) - Div(Tgs/Tpas))*ZS*(S_{Mneu} - S_{Malt}) + S_{Malt}.$$

5. Procédé selon la revendication 2, **caractérisé en ce que** les facteurs dépendant du nombre (ZS) ($t_{(zs)}$/Tpas) = ((Tgs/Tpas) - Div(Tgs/Tpas))*ZS sont calculés à l'avance et mémorisés.

6. Procédé selon la revendication 5, **caractérisé en ce que** les facteurs calculés à l'avance sont stockés dans une matrice avec un indice qui correspond au nombre (ZS) correspondant.

7. Procédé selon l'une des revendications 1 à 6, **caractérisé en ce que** les données de capteur traitées sont utilisées comme valeurs d'entrée d'un procédé de déclenchement pour des équipements de protection de personne.

8. Procédé selon l'une des revendications 1 à 7, **caractérisé en ce que** l'au moins un capteur asynchrone (10) est réalisé sous la forme d'une partie d'un dispositif de détection avant haut et/ou d'un dispositif de détection de l'environnement et/ou d'un dispositif de détection de choc latéral et/ou d'un dispositif de détection de contact pour la protection des piétons.

Fig. 1

EP 1 807 741 B1

Tsg

Tpas

Ta1    Ta2    Ta3    Ta4    Ta5

Wert wird verworfen

Wert wird verworfen

Ausleseabtastpuls    Sensorabtastwert    O    Berechneter Durchschnittswert der Sensorabtastwerte

Fig. 2

T3

T2

T1

Tsg

Tpas

Ta    Ta    Ta    Ta    Ta

ZS=0    ZS=1    ZS=2    ZS=3    ZS=0

Fig. 3

9

Fig. 4

**EP 1 807 741 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19734248 A1